# EUROPÄISCHE PATENTSCHRIFT

(11) **EP 4 390 310 B1**
(45) Veröffentlichungstag und Bekanntmachung des Hinweises auf die Patenterteilung: **13.05.2026**
(21) Anmeldenummer: 23216331.1
(22) Anmeldetag: 13.12.2023
(51) Int. Cl.: G01C 15/00

(54) **LASER-NIVELLIERVORRICHTUNG**
LASER LEVELLING DEVICE
NIVEAU LASER

(30) Priorität: 22.12.2022 DE 102022214292
(43) Veröffentlichungstag der Anmeldung: 26.06.2024
(73) Patentinhaber: Robert Bosch GmbH, 70442 Stuttgart (DE)
(72) Erfinder: Moren, Gaetan, 70197 Stuttgart (DE)

(56) Entgegenhaltungen:
- WO-A1-2018/009193
- US-A1- 2009 100 691

## Beschreibung

Die vorliegende Erfindung betrifft eine Laser-Nivelliervorrichtung nach dem Oberbegriff des Anspruchs 1.

### Stand der Technik

Aus der DE 10 2016 225 242 A1 ist eine Laser-Nivelliervorrichtung mit Linienprojektionsvorrichtungen bekannt.

In der EP 2411762 A1 ist eine Laser-Nivelliervorrichtung zum Erzeugen eines optischen Nivelliersignals bekannt, die ein in einem Gehäuse pendelbar anordenbares Lasermodul zur Erzeugung eines Nivelliersignals aufweist.

WO 2018/009193 A1 beschreibt eine Vorrichtung und ein Verfahren zum Projizieren von sichtbaren, nivellierten Laserlinien auf eine Arbeitsfläche und zum Messen von Abständen entlang der nivellierten Laserlinien.

### Offenbarung der Erfindung

Die vorliegende Erfindung geht aus von einer Laser-Nivelliervorrichtung mit drei Linienprojektionsvorrichtungen, mit einem Gehäuse, wobei das Gehäuse drei Austrittskuppeln für jeweils eine der Linienprojektionsvorrichtungen aufweist, und mit einer Bedieneinheit zur Bedienung der Laser-Nivelliervorrichtung. Es wird vorgeschlagen, dass die Bedieneinheit zwischen den Austrittskuppeln angeordnet ist.

Die Erfindung erhöht dabei die Benutzerfreundlichkeit, da die Bedieneinheit derart an dem Gehäuse der Laser-Nivelliervorrichtung angeordnet ist, dass ein Benutzer intuitiv die Laser-Nivelliervorrichtung bedienen kann. So ermöglicht die Anordnung der Bedieneinheit, dass der Benutzer unmittelbar erkennt, wofür die Bedieneinheit ausgebildet ist, ohne durch ein mehrfaches Testen herauszufinden, wofür die Bedieneinheit ausgebildet ist.
Sitz: Stuttgart, Registergericht: Amtsgericht Stuttgart, HRB 14000;
Aufsichtsratsvorsitzender: Prof. Dr. Stefan Asenkerschbaumer;
Geschäftsführung: Dr. Stefan Hartung, Dr. Christian Fischer, Dr. Markus Forschner,
Stefan Grosch, Dr. Markus Heyn, Dr. Frank Meyer, Katja von Raven, Dr. Tanja Rückert
0108 14.02.2023

Die Laser-Nivelliervorrichtung kann beispielsweise als ein Linienlaser, ein Kreuzlinienlaser oder ein selbstnivellierendes Mehr-Linien-Lasergerät ausgebildet sein. "Laser-Nivelliervorrichtungen" dienen der Erzeugung von optischen Markierungen, insbesondere Lasermarkierungen, im Rahmen von Nivellier-, Ausricht-, Vermessungs- und/oder Markierungsaufgaben, wie sie insbesondere im handwerklichen Bereich auftreten, beispielsweise bei einem Innenausbau von Gebäuden, bei Bauarbeiten, bei der Anbringung von Markierungen an Wänden oder dergleichen. Prinzipiell erlauben Laser-Nivelliervorrichtungen Lasermarkierungen zu erzeugen, insbesondere auf Objekte zu projizieren, die eine von einer Ausrichtung von Böden, Decken, Wänden oder anderen Gegenständen, beispielsweise der vertikalen Wand eines Schranks, insbesondere aber auch eine von der Ausrichtung des Gehäuses der Laser-Nivelliervorrichtung, unabhängige Referenz darstellen. Grundsätzlich erlauben Laser-Nivelliervorrichtungen in zumindest einem Betriebszustand eine am Gravitationsfeld, d.h. eine an der Richtung der Schwerkraft oder eine bezogen auf das Lot, ausgerichtete Lasermarkierung als Referenz zu erzeugen. Insbesondere kann die erzeugte Lasermarkierung bezogen auf die Laser-Nivelliervorrichtung beispielsweise horizontal und/oder vertikal und/oder unter einem anderen definierten Winkel zum Lot ausgerichtet sein.

Die Linienprojektionsvorrichtung umfasst einen reflektierenden Kegel und einen Laserstrahl, der in Richtung einer Kegelachse dieses reflektierenden Kegels gegen die Spitze dieses Kegels richtbar ist. Hier sind zumindest zwei Linienprojektionsvorrichtung vorgesehen, die winklig zueinander im Gehäuse angeordnet sind. Die Linienprojektionsvorrichtung können beispielsweise senkrecht zueinander angeordnet sein. Die Laser-Nivelliervorrichtung kann zumindest ein Lasermodul zur Erzeugung des Laserstrahls aufweisen. Das Lasermodul weist zumindest eine Lichtquelle zur Erzeugung einer Lasermarkierung auf einem Objekt auf, insbesondere einen Laser, einen Halbleiterlaser, typischerweise eine Laserdiode. Das Lasermodul kann zumindest einen Strahlteiler aufweisen, der dazu vorgesehen ist, aus dem von der Laserdiode emittierten Laserlicht eine projizierbare Laserlinie, insbesondere eine über einen Winkelbereich von 360° projizierbare Laserlinie, zu erzeugen. Ferner kann das Lasermodul weitere strahlformende und/oder strahllenkende und/oder die Eigenschaften des Laserlichts beeinflussende optische Element, beispielsweise Linsen, Filter, diffraktive Elemente, Spiegel, Reflektoren, optisch transparente Scheiben oder dergleichen, aufweisen. Insbesondere reflektierende Kegel können genutzt werden, um technisch einfach eine Auffächerung des von der Lichtquelle emittierten Laserlichts zu einer Laserebene zu realisieren, sodass bei Projektion dieser Laserebene auf einen Gegenstand eine Linie, insbesondere eine Markierungslinie, bevorzugt eine über einen Winkelbereich von 360° projizierbare Laserlinie, entsteht.

Die genaue Ausgestaltung, insbesondere Form und Farbe, der mittels der Laser-Nivelliervorrichtung, insbesondere mittels des Lasermoduls, erzeugten Lasermarkierung kann, unter anderem je nach Einsatzbereich und Aufgabe, unterschiedlich sein. So kann beispielsweise der Winkelbereich, in den das Laserlicht in Form einer Laserebene ("Laserfächer") emittiert wird, auch von 360° abweichen und beispielsweise nur einen Winkelbereich von 270° oder 180° abdecken. Ferner kann die Laserebene auch über den Winkelbereich unterbrochen sein, beispielsweise auf Grund von Abschattungen oder dergleichen, insbesondere von Teilen des Gehäuses der Laser-Nivelliervorrichtung herrühren.

Ferner weist die Laser-Nivelliervorrichtung auch drei, Lasermodule auf, die jeweils an einem Optikträger, insbesondere einer Pendelanordnung, aufgenommen sind, sodass bei Ausrichtung des Optikträgers, insbesondere der Pendelanordnung, am Lot zeitgleich mehrere Lasermodule und damit auch deren erzeugte Laserebenen bezogen auf das Lot ausgerichtet werden und als Referenz dienen können. Gemäß der Erfindung weist die Laser-Nivelliervorrichtung drei Lasermodule auf, die zueinander orthogonale Laserebenen emittieren, deren Projektion auf Objekte jeweils zueinander orthogonale Markierungslinien erzeugt. Dabei kann eine vertikal ausgerichtete Laserebene eine entlang der durch das Lot vorgegebenen Richtung aufweisen, d.h. die vertikal ausgerichtete Laserebene ist kollinear mit einem die Schwerkraft beschreibenden Vektor.

Der Optikträger, insbesondere die Pendelanordnung, ist in dem Gehäuse angeordnet. Der Optikträger, insbesondere die Pendelanordnung, ganz insbesondere ein umfasstes Pendel der Pendelanordnung, ist zum Halten sowie Ausrichten des Lasermoduls vorgesehen, wobei das Lasermodul mittels des Pendels der Pendelanordnung im Wesentlichen unabhängig von einer Ausrichtung des Gehäuses am Lot frei selbstausrichtbar, insbesondere allseitig pendelbar oder schwingend, ausgebildet ist. Das Lasermodul dient bei dessen Betrieb der Erzeugung zumindest einer Lasermarkierung auf einem Objekt.

Der Laserstrahl, der mittels des Lasermoduls erzeugt wird, kann als eine optische Achse dienen. Abhängig einer Anzahl an Laserstrahlen und/oder Linienprojektionsvorrichtung kann eine Mehrzahl an optischen Achsen vorgesehen sein.

Das Gehäuse umfasst eine Energieversorgungseinheit, die zumindest zur Energieversorgung des Lasermoduls ausgebildet ist. Die Energieversorgungseinheit ist für einen Akkubetrieb mittels Akkus, insbesondere Handwerkzeugmaschinenakkupacks, und/oder für einen Netzbetrieb vorgesehen. In einer bevorzugten Ausführungsform ist die Energieversorgungseinheit für den Akkubetrieb ausgebildet. Im Rahmen der vorliegenden Erfindung soll unter einem "Handwerkzeugmaschinenakkupack" ein Zusammenschluss von zumindest einer Akkuzelle und einem Akkupackgehäuse verstanden werden. Der Handwerkzeugmaschinenakkupack ist vorteilhafter Weise zur Energieversorgung von handelsüblichen akkubetriebenen Handwerkzeugmaschinen ausgebildet. Die zumindest eine Akkuzelle kann beispielsweise als eine Li-Ion-Akkuzelle mit einer Nennspannung von 3,6 V ausgebildet sein. Beispielhaft kann der Handwerkzeugmaschinenakkupack bis zu zehn Akkuzellen umfassen, wobei auch eine andere Anzahl von Akkuzellen denkbar ist. Eine Ausführungsform als akkubetriebene Laser-Nivelliervorrichtung als auch der Betrieb als netzbetriebene Laser-Nivelliervorrichtung sind dem Fachmann hinreichend bekannt, weshalb hier nicht auf die Einzelheiten der Energieversorgung eingegangen wird.

Das Gehäuse weist drei Austrittskuppeln auf, die jeweils einer der Linienprojektionsvorrichtung zugeordnet sind. Die Linienprojektionsvorrichtung kann derart in die Austrittskuppeln eintauchen, dass die erzeugte Laserebene durch die Austrittskuppeln austreten kann. Die Austrittskuppeln ragen jeweils aus dem Gehäuse heraus. Die Austrittskuppeln können jeweils mit dem Gehäuse verbunden sein. Hierbei können die Austrittskuppeln beispielsweise mittels einer Schraubverbindung, einer Rastverbindung, einer Hakenverbindung oder mittels Schrauben mit dem Gehäuse verbunden sein. Die Austrittskuppeln können beispielsweise würfelförmig, quaderförmig, gekrümmt, nach Art einer Halbschale, nach Art eines Kegelstumpfs oder nach Art eines Pyramidenstumpfs ausgeformt sein. Es ist möglich, dass die Austrittskuppeln Fenster für den jeweiligen Laserstrahl, insbesondere die jeweilige Laserebene, aufweist. Weiter können die Austrittskuppeln Stege zwischen jeweils einem Fenster einer der Austrittskuppeln aufweisen. Zudem können die Austrittskuppeln jeweils einen flachen Deckel aufweisen.

Die Bedieneinheit ist an dem Gehäuse angeordnet. Die Bedieneinheit dient zur Bedienung der Laser-Nivelliervorrichtung. Die Bedieneinheit kann zumindest eine Funktion der Laser-Nivelliervorrichtung steuern, insbesondere aktivieren und/oder deaktivieren, wie beispielsweise zumindest eines der Lasermodule aktivieren, eine Kommunikationsverbindung aktivieren oder eine Beleuchtungseinheit aktivieren. Die Bedieneinheit ist derart zwischen den Austrittskuppeln angeordnet, dass die Bedieneinheit von den Austrittskuppeln umschlossen oder umgriffen ist. Hierdurch wird ermöglicht, dass eine der Bedieneinheit hinterlegten Funktion für den Benutzer intuitiv aktivierbar ist.

In einer Ausführungsform der Laser-Nivelliervorrichtung weist jede der Austrittskuppeln jeweils eine Flächennormale auf und die Bedieneinheit ist relativ zu einer durch zwei Flächennormalen der Austrittskuppeln aufgespannten Ebene an dem Gehäuse angeordnet. Als die Flächennormale soll hier ein Vektor verstanden werden, der senkrecht auf einer Fläche angeordnet ist. Jede Austrittskuppel weist jeweils eine der Flächennormalen auf, wobei die Flächennormale senkrecht der jeweiligen Austrittskuppel ist. Beispielsweise ist die Flächennormale senkrecht auf dem flachen Deckel der Austrittskuppel. Die Flächennormale der beiden Austrittskuppeln spannen eine Ebene auf. Ein Ursprung dieser Ebene kann innerhalb des Gehäuses liegen. Je nach Ausführungsform kann der Ursprung der Ebene mit einem Ursprung der optischen Achsen der Laserstrahlen übereinstimmen. Die Flächennormalen der Austrittskuppeln können zumindest teilweise kollinear bzw. koaxial mit den jeweiligen optischen Achsen der Lasermodule sein. In einem Betrieb der Laser-Nivelliervorrichtung, insbesondere bei einem Betrieb auf einer schiefen Ebene, können die Flächennormalen der Austrittskuppeln und die jeweilige optische Achse zumindest teilweise winklig zueinander sein. Dies kann dann der Fall sein, wenn der Optikträger pendelt oder auf einem schiefen Untergrund angeordnet ist. Die Bedieneinheit ist relativ zu der Ebene an dem Gehäuse angeordnet, die die beiden Flächennormalen aufspannen. Die Anordnung der Bedieneinheit relativ zu der Ebene der beiden Flächennormalen der Austrittskuppeln kann quer, insbesondere senkrecht, winklig oder parallel sein.

In einer Ausführungsform der Laser-Nivelliervorrichtung weist die Bedieneinheit zumindest ein Bedienelement auf, das zwischen den Austrittskuppeln angeordnet ist. Das Bedienelement dient zur Bedienung der Laser-Nivelliervorrichtung. Die Bedieneinheit kann eine Mehrzahl an Bedienelementen aufweisen, wie beispielsweise zwei Bedienelemente für eine Aktivierung einer Kommunikationsverbindung mittels Bluetooth und für eine Aktivierung einer Beleuchtung. Es sind auch bis zu drei weitere Bedienelemente für jeweils eines der Lasermodule möglich. Jedes Bedienelement kann jeweils eine Bedienfläche aufweisen. Die Bedienelemente können beispielsweise flach, gekrümmt, kuppelartig, würfelartig, quaderartig oder vorsprungartig ausgebildet sein. Die Bedienflächen können beispielhaft mehreckig, wie dreieckig, viereckig, fünfeckig oder sechseckig sein, quadratisch, rechteckig, rund, oval, elliptisch oder dergleichen ausgebildet sein.

In einer Ausführungsform der Laser-Nivelliervorrichtung weist das Bedienelement eine Flächennormale auf, wobei die Flächennormale des Bedienelements relativ zu der durch die zwei Flächennormalen der Austrittskuppeln aufgespannten Ebene angeordnet ist. Im Wesentlichen jedes der Bedienelemente weist jeweils eine Flächennormale auf. Die Flächennormale des Bedienelements ist senkrecht auf dem Bedienelement, insbesondere auf der zugehörigen Bedienfläche, angeordnet. Die Flächennormale des Bedienelements kann dabei in der durch die zwei Flächennormale der Austrittskuppeln aufgespannten Ebene liegen, quer zu der Ebene oder senkrecht zu der Ebene angeordnet sein.

In einer Ausführungsform der Laser-Nivelliervorrichtung weist das Gehäuse zumindest eine Trennfläche auf, die zumindest abschnittsweise zwischen den Austrittskuppeln angeordnet ist. Das Gehäuse kann eine Mehrzahl an Trennflächen aufweisen. Eine Anzahl an Trennflächen kann mit einer Anzahl an Austrittskuppeln korreliert sein. Die Trennfläche kann ein Teil, ein Element oder ein Bereich des Gehäuses sein. Die Trennfläche kann beispielsweise eben, flach, eckig, oder gekrümmt ausgebildet sein. Zudem kann die Trennfläche mit dem Gehäuse verbunden sein oder einstückig mit dem Gehäuse sein. Beispielhaft kann die Trennfläche mehreckig, wie dreieckig, viereckig, fünfeckig oder sechseckig, quadratisch, rechteckig, rund, oval, elliptisch oder dergleichen ausgebildet sein. Es können bis zu drei Austrittskuppeln vorgesehen, wobei bei zwischen jeweils zwei Austrittskuppeln jeweils eine Trennfläche vorgesehen sein kann. Bei zwei Austrittskuppeln kann zumindest eine Trennfläche angeordnet sein. Bei drei Austrittskuppeln können bis zu drei Trennflächen jeweils zwischen zwei der Austrittskuppeln angeordnet sein. Eine Länge der Trennfläche kann mit einer Länge der jeweiligen Austrittskuppel im Wesentlichen übereinstimmen. So kann die Trennfläche zumindest zwei der Austrittskuppeln trennen. Die Trennfläche kann winklig zu den Austrittskuppeln angeordnet sein.

In einer Ausführungsform der Laser-Nivelliervorrichtung weist die Trennfläche eine Flächennormale auf, die auf der durch die Flächennormalen der Austrittskuppeln aufgespannten Ebene liegt. Die Flächennormale der Trennfläche ist senkrecht auf der Trennfläche. Dabei liegt die Flächennormale der Trennfläche im Wesentlichen vollständig auf der aufgespannten Ebene durch die Flächennormalen der Austrittskuppeln. Die Flächennormale der Trennfläche liegt somit in der durch die zwei Flächennormale der Austrittskuppeln aufgespannten Ebene. Bei einer Verlängerung der Flächennormale der Trennfläche, kann ein Vektor der Flächennormale der Trennfläche mit dem Ursprung der durch die Flächennormale der Austrittskuppeln aufgespannten Ebene zusammenfallen.

In einer Ausführungsform der Laser-Nivelliervorrichtung das Bedienelement auf der Trennfläche angeordnet ist. Es kann eine Mehrzahl an Bedienelementen auf der Trennfläche angeordnet sein, wie beispielsweise zwei. Das Bedienelement kann mit der Trennfläche form-, kraft- und/oder stoffschlüssig verbunden sein. Es ist möglich, dass die Trennfläche und das Bedienelement einstückig sind. Es ist auch denkbar, dass die Trennfläche das Bedienelement ausbildet.

In einer Ausführungsform der Laser-Nivelliervorrichtung weist die Laser-Nivelliervorrichtung drei Linienprojektionsvorrichtungen und drei Austrittskuppeln auf, wobei die Bedieneinheit zwischen den drei Austrittskuppeln angeordnet ist.

Die drei Austrittskuppeln können beispielsweise in einem Dreieck zueinander angeordnet sein. Die Bedieneinheit kann innerhalb dieses Dreiecks am Gehäuse angeordnet sein. So kann die Bedieneinheit zwischen den drei Austrittskuppeln am Gehäuse angeordnet sein.

In der erfindungsgemäßen Ausführungsform der Laser-Nivelliervorrichtung weisen die drei Austrittskuppeln jeweils eine Flächennormale auf und die Bedieneinheit umfasst zumindest eine Bedienfläche, wobei die Bedienfläche zumindest teilweise auf einer durch die drei Flächennormalen aufgespannten Ebene angeordnet ist. Die Flächennormalen sind jeweils senkrecht auf der zugehörigen Austrittskuppel. Jeweils ein Punkt auf der jeweiligen Flächennormalen der Austrittskuppeln spannen die Ebene auf, dass die Ebene zwischen den drei Flächennormalen angeordnet ist. Somit spannen drei Punkte die Ebene zwischen den Flächennormalen der Austrittskuppeln auf. Die aufgespannte Ebene der drei Flächennormalen kann dreieckig sind, wobei das Dreieck beispielsweise gleichschenklig oder gleichseitig sein kann. Die Bedienfläche kann beispielsweise eben, flach, gekrümmt, kuppelartig, quaderförmig oder würfelförmig ausgebildet sein Zudem kann die Bedienfläche beispielsweise mehreckig, wie dreieckig, viereckig, fünfeckig oder sechseckig, rund, oval oder ellipsenförmig ausgebildet sein. Die Bedienfläche ist zwischen den drei Austrittskuppeln angeordnet. Die Bedienfläche kann an drei Trennflächen angrenzen.

In einer Ausführungsform der Laser-Nivelliervorrichtung weist die Bedieneinheit drei Bedienelemente auf, die jeweils einer Linienprojektionsvorrichtung zugeordnet sind. Die drei Bedienelemente können beispielsweise eben, flach, gekrümmt, kuppelartig, quaderförmig oder würfelförmig ausgebildet sein. Zudem weist jede der drei Bedienelemente jeweils eine Bedienfläche auf, die beispielsweise mehreckig, wie dreieckig, viereckig, fünfeckig oder sechseckig, rund, oval oder ellipsenförmig ausgebildet sein kann. Jedes der drei Bedienelemente aktiviert jeweils eines der Lasermodule der Linienprojektionsvorrichtungen. Hierdurch können sukzessive und bedarfsgemäß jeweils eines der Lasermodule aktiviert werden. Die Anordnung der drei Bedienelemente zwischen den drei Austrittskuppeln ist derart, dass der Benutzer direkt erkennen kann, welches der Linienprojektionsvorrichtungen mittels des jeweiligen Bedienelements aktiviert wird, wenn der Benutzer das entsprechende Bedienelement betätigt. So weiß der Benutzer intuitiv, welches der Bedienelemente für welches der Linienprojektionsvorrichtungen vorgesehen ist. Jedes der drei Bedienelemente weist jeweils eine Flächennormale auf.

Eine Zuordnung der drei Bedienelemente und zu der jeweiligen Linienprojektionsvorrichtung kann durch einen minimalen Abstand der Flächennormale des jeweiligen Bedienelements zu der Flächennormale der entsprechenden Austrittskuppel sein. So aktiviert jenes Bedienelement die entsprechende Linienprojektionsvorrichtung zu der der Abstand minimal ist. Weiter aktiviert also jenes der drei Bedienelemente die zugehörige Linienprojektionsvorrichtung, das in Richtung der jeweiligen Austrittskuppel und/oder in Richtung der jeweiligen Linienprojektionsvorrichtung zeigt. Jenes der drei Bedienelemente, das am nächsten an einer der drei Linienprojektionsvorrichtungen am Gehäuse angeordnet ist, bedient die entsprechende Linienprojektionsvorrichtung.

In einer Ausführungsform grenzen zumindest zwei der drei Bedienelemente an einer der Trennflächen an. Wenn drei Trennflächen vorgesehen sind, können jeweils zwei der drei Trennflächen an jeweils einer der drei Trennflächen angrenzen. Die drei Trennflächen können strahlenartig um die drei Bedienelemente am Gehäuse angeordnet sein.

### Kurze Beschreibung der Zeichnungen

Die Erfindung wird nachfolgend anhand von einer bevorzugten Ausführungsform erläutert. Die Zeichnungen im Folgenden zeigen:
Fig. 1 eine schematische Ansicht einer erfindungsgemäßen Laser-Nivelliervorrichtung;
Fig. 2 einen ersten Ausschnitt einer perspektivischen Ansicht der Laser-Nivelliervorrichtung;
Fig. 3 einen zweiten Ausschnitt der perspektivischen Ansicht der Laser-Nivelliervorrichtung;

### Beschreibung des Ausführungsbeispiels

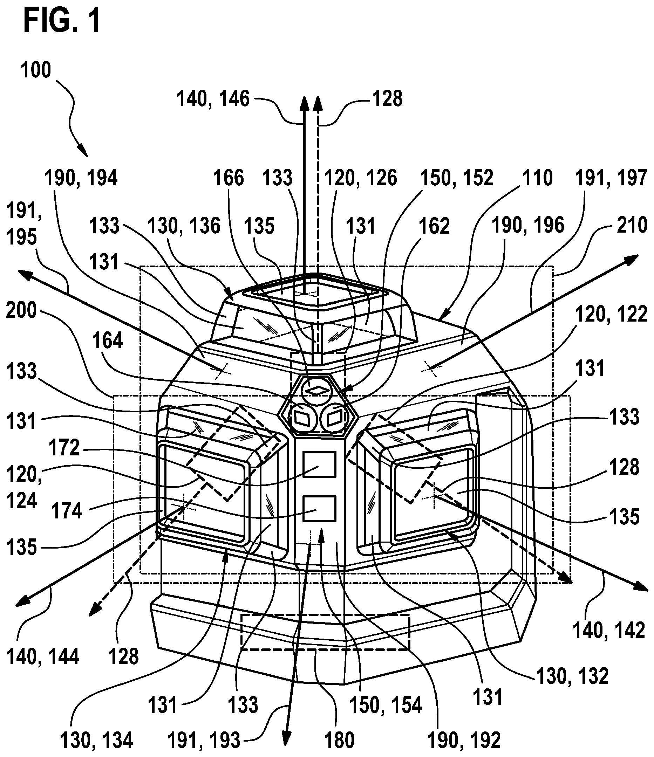

Fig. 1 zeigt eine schematische Ansicht einer erfindungsgemäßen Laser-Nivelliervorrichtung 100, die hier beispielhaft als ein Kreuzlinienlaser ausgebildet ist. Die Laser-Nivelliervorrichtung 100 umfasst ein Gehäuse 110, drei nicht näher dargestellte Linienprojektionsvorrichtungen 120 und drei Austrittskuppeln 130. Bei den Linienprojektionsvorrichtungen 120 sind eine erste Linienprojektionsvorrichtung 122, eine zweite Linienprojektionsvorrichtung 124 und eine dritte Linienprojektionsvorrichtung 126 vorgesehen. Bei den drei Austrittskuppeln 130 ist eine erste Austrittskuppel 132, eine zweiten Austrittskuppel 134 und eine dritte Austrittskuppel 136 vorgesehen. Hier sei jedoch angemerkt, dass sowohl die drei Linienprojektionsvorrichtungen 120 als auch die drei Austrittskuppeln 130 jeweils im Wesentlichen gleichwertig sind und eine Nummerierung hier lediglich einen beispielhaften Charakter hat.

Jede Linienprojektionsvorrichtung 120 umfasst einen nicht näher dargestellten reflektierenden Kegel und einen Laserstrahl 122. Der Laserstrahl 128 ist in Richtung einer Kegelachse des jeweiligen reflektierenden Kegels gegen die Spitze dieses Kegels richtbar. Der jeweilige Laserstrahl 128, bevor dieser auf den entsprechenden Kegel trifft, bildet jeweils eine optische Achse aus. Die drei Linienprojektionsvorrichtungen 120 sind hier winklig, insbesondere senkrecht, zueinander im Gehäuse 110 angeordnet. Beispielhaft umfasst hier jede Linienprojektionsvorrichtung 120 jeweils ein nicht näher dargestelltes Lasermodul zur Erzeugung eines der Laserstrahlen 128. Jede Linienprojektionsvorrichtung 120 ragt hier in jeweils eine der Austrittskuppeln 130 hinein.

Die Austrittskuppeln 130 sind beispielhaft jeweils mittels Schrauben mit dem Gehäuse 110 verbunden. Die Austrittskuppeln 130 sind beispielhaft jeweils nach Art eines Pyramidenstumpfs ausgebildet. Die Austrittskuppeln 130 umfassen jeweils eine Mehrzahl an Fenstern 131 für den jeweiligen Laserstrahl 128. Die Fenster 131 sind jeweils durch Stege 133 des Austrittskuppeln 130 getrennt. Jede Austrittskuppel 130 umfasst beispielhaft einen flachen Deckel 135.

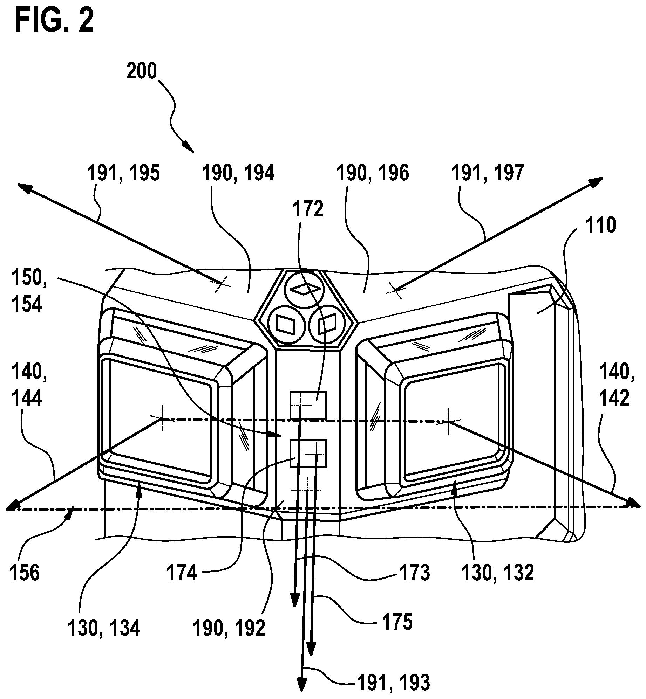

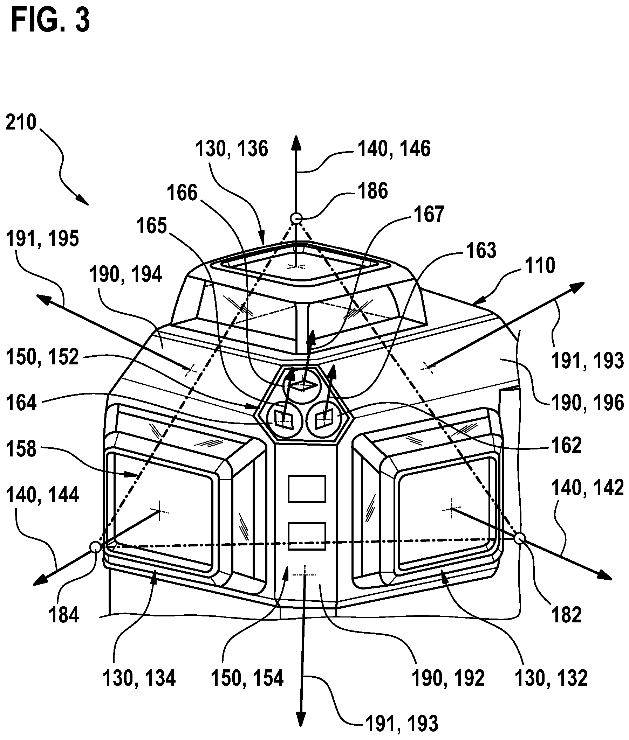

Zudem umfasst die Laser-Nivelliervorrichtung 100 eine Bedieneinheit 150, die zwischen den Austrittskuppeln 130 am Gehäuse 110 angeordnet ist. Die Laser-Nivelliervorrichtung 100 ist zumindest mittels der Bedieneinheit 150 bedienbar. Beispielhaft ist hier eine erste Bedieneinheit 152 zur Bedienung der Linienprojektionsvorrichtung 120 und eine zweite Bedieneinheit 154 zur Bedienung weiterer Funktionen der Laser-Nivelliervorrichtung 100 vorgesehen, siehe auch Fig. 2 und 3. Die erste Bedieneinheit 152 umfass drei Bedienelemente 162, 164, 166, siehe auch Fig. 3. Die zweite Bedieneinheit 154 umfasst zwei Bedienelemente 172, 174, siehe auch Fig. 2. Die Bedieneinheit 150 ist zwischen den Austrittskuppeln 130 angeordnet. Dabei ist die erste Bedieneinheit 152 zwischen der ersten Austrittskuppel 132, der zweiten Austrittskuppel 134 und der dritten Austrittskuppel 136 angeordnet, siehe auch Fig. 3. Die zweite Bedieneinheit 154 ist beispielhaft zwischen der ersten Austrittskuppel 132 und der zweiten Austrittskuppel 134 angeordnet.

Das Gehäuse 110 weist eine Energieversorgungseinheit 180 auf. Die Energieversorgungseinheit 180 versorgt zumindest die Lasermodule mit Energie. Die Energieversorgungseinheit 180 ist hier nicht näher dargestellt.

Jede der Austrittskuppeln 130 umfasst jeweils eine Flächennormale 140. Dabei umfasst die erste Austrittskuppel 132 eine erste Flächennormale 142, die zweite Austrittskuppel 134 eine zweite Flächennormale 144 und die dritte Austrittskuppel 136 eine dritte Flächennormale 146, siehe auch Fig. 2 und 3. Die Bedieneinheit 150 ist relativ zu einer durch zwei der Flächennormalen 140 der Austrittskuppeln 130 aufgespannten Ebene 156, 158 an dem Gehäuse 110 angeordnet, siehe auch Fig. 2 und 3. Die Flächennormale 140 ist jeweils senkrecht auf einer der Austrittskuppeln 130, insbesondere auf dem jeweiligen Deckel 135. So ist die erste Flächennormale 142 der ersten Austrittskuppel 132 senkrecht auf der ersten Austrittskuppel 132. Die zweiten Flächennormale 144 der zweiten Austrittskuppel 134 ist senkrecht auf der zweiten Austrittskuppel 134. Die dritte Flächennormale 146 der dritten Austrittskuppel 136 ist senkrecht auf der dritten Austrittskuppel 136.

Das Gehäuse 110 umfasst zumindest eine Trennfläche 190. Dabei umfasst das Gehäuse 110 eine erste Trennfläche 192, die zwischen der ersten Austrittskuppel 132 und der zweiten Austrittskuppel 134 angeordnet ist. Eine zweite Trennfläche 194, die zwischen der zweiten Austrittskuppel 134 und der dritten Austrittskuppel 136 angeordnet ist. Eine dritte Trennfläche 196, die zwischen der dritten Austrittskuppel 136 und der ersten Austrittskuppel 132 angeordnet ist. Die Trennflächen 190 sind hier beispielhaft flach mit einer rechteckigen Außenkontur ausgeformt. Die Trennflächen 190 sind beispielhaft winklig zu den jeweiligen Austrittskuppel 130 am Gehäuse 110 ausgebildet. Das Gehäuse 110 formt hier beispielhaft die Trennflächen 190 aus, sodass diese einstückig sind. Jede der Trennflächen 190 umfasst jeweils eine Flächennormale 191. So umfasst die erste Trennfläche 192 eine erste Flächennormale 193. Die zweite Trennfläche 194 umfasst eine zweite Flächennormale 195. Die dritte Trennfläche 196 umfasst eine dritte Flächennormale 197, siehe auch Fig. 2 und 3.

Fig. 2 stellt einen ersten Ausschnitt 200 einer perspektivischen Ansicht der Laser-Nivelliervorrichtung 100 dar. Die erste Flächennormale 142 der ersten Austrittskuppel 132 spannt mit der zweiten Flächennormale 144 der zweiten Austrittskuppel 134 eine erste Ebene 156 auf. Die zweite Bedieneinheit 154 ist relativ zu der ersten Ebene 156 angeordnet. Hier ist die zweite Bedieneinheit 154 quer, insbesondere senkrecht, zur ersten Ebene 156 am Gehäuse 110 angeordnet. Die zweite Bedieneinheit 154 umfasst die zwei Bedienelemente 172, 174. Dabei ist ein erstes Bedienelement 172 der zweiten Bedieneinheit 154 dazu ausgebildet, eine Kommunikationsverbindung mittels Bluetooth zu aktivieren. Ein zweites Bedienelement 174 der zweiten Bedieneinheit 154 ist dazu ausgebildet, eine Beleuchtung zu aktivieren. Beispielhaft sind die beiden Bedienelemente 172, 174 der zweiten Bedieneinheit leicht gekrümmt mit einer viereckigen Außenkontur ausgebildet. Jedes der Bedienelemente 172, 174 der zweiten Bedieneinheit 154 umfasst jeweils eine Flächennormale 173, 175. Die Flächennormale 173, 175 der zweiten Bedieneinheit 154 sind relativ zu der ersten Ebene 156 am Gehäuse 110 angeordnet. Hier sind die beiden Flächennormale 173, 175 jeweils parallel zur ersten Ebene 156. Die Flächennormale 193 der ersten Trennfläche 192 ist hier parallel zu der ersten Ebene 156. Die zweite Bedieneinheit 154 mit den beiden Bedienelementen 172, 174 ist auf der ersten Trennfläche 192 angeordnet. Dabei ist die erste Trennfläche 192 zwischen der ersten Austrittskuppel 132 und der zweiten Austrittskuppel 134 angeordnet. Weiter sind das erste Bedienelement 172 der zweiten Bedieneinheit 154 und das zweite Bedienelement 174 der zweiten Bedieneinheit 154 zwischen der ersten Austrittskuppel 132 und der zweiten Austrittskuppel 134 angeordnet.

Fig. 3 zeigt einen zweiten Ausschnitt 210 der perspektivischen Ansicht der Laser-Nivelliervorrichtung 100. Die erste Bedieneinheit 152 umfasst hier beispielhaft eine sechseckige Außenkontur. Die drei Bedienelemente 162, 164, 166 der ersten Bedieneinheit 152 sind hier jeweils beispielhaft flach mit einer fünfeckigen Außenkontur ausgebildet. Die erste Bedieneinheit 152 ist zwischen den drei Austrittskuppeln 130 angeordnet. Jede der Bedienelemente 162, 164, 166 der ersten Bedieneinheit 152 weist jeweils eine Bedienfläche auf. Die Bedienflächen der Bedienelemente 162, 164, 166 der ersten Bedieneinheit umfassen jeweils eine Flächennormale 163, 165, 167. So umfasst das erste Bedienelement 162 der ersten Bedieneinheit 152 eine erste Flächennormale 163. Das zweite Bedienelement 164 der ersten Bedieneinheit 152 umfasst eine zweite Flächennormale 165. Das dritte Bedienelement 166 der ersten Bedieneinheit 152 umfasst eine dritte Flächennormale 167. Die Flächennormalen 163, 165, 167 der Bedienflächen der ersten Bedieneinheit 152 sind jeweils senkrecht auf der Bedienfläche. Jeweils ein Punkt 182, 184, 186 auf der jeweiligen Flächennormalen 142, 144, 146 der Austrittskuppeln 130 spannen eine zweite Ebene 158 auf. Die zweite Ebene 158 ist zwischen den drei Flächennormalen 142, 144, 146 der Austrittskuppeln 130 angeordnet. Die zweite Ebene 158 ist dreieckig, wobei sie hier beispielhaft ein gleichseitiges Dreieck ist. Die erste Bedieneinheit 152 grenzt an die drei Trennflächen 192, 194, 196 an. Die erste Bedieneinheit 152 ist relativ zu der zweiten Ebene 158 am Gehäuse 110 angeordnet. Hier liegt die erste Bedieneinheit 152 beispielhaft auf der zweiten Ebene 158, sodass die erste Bedieneinheit 152 parallel zu der zweiten Ebene 158 ist. Die Flächennormalen 163, 165, 167 der Bedienelemente 162, 164, 166 der ersten Bedieneinheit 152 sind jeweils senkrecht auf der zweiten Ebene 158.

Die drei Bedienelemente 162, 164, 166 der ersten Bedieneinheit 152 sind jeweils einer der Linienprojektionsvorrichtungen 122, 124, 126 zugeordnet. So aktiviert jedes der drei Bedienelemente 162, 164, 166 jeweils eines der Lasermodule der Linienprojektionsvorrichtungen 122, 124, 126. Beispielsweise aktiviert das erste Bedienelement 162 der ersten Bedieneinheit 152 die erste Linienprojektionsvorrichtung 122. Das erste Bedienelement 162 der ersten Bedieneinheit 152 ist in Richtung zu der ersten Austrittskuppel 132 angeordnet. Das zweite Bedienelement 164 der ersten Bedieneinheit 152 aktiviert die zweite Linienprojektionsvorrichtung 124. Das zweite Bedienelement 164 der ersten Bedieneinheit 152 ist in Richtung zu der zweiten Austrittskuppel 134 angeordnet. Das dritte Bedienelement 166 der ersten Bedieneinheit 152 aktiviert die dritte Linienprojektionsvorrichtung 126. Das dritte Bedienelement 162 der ersten Bedieneinheit 152 ist in Richtung zu der dritten Austrittskuppel 136 angeordnet. Die drei Bedienelemente 162, 164, 166 der ersten Bedieneinheit 152 sind derart zwischen den drei Austrittskuppeln 132, 134, 136 angeordnet, dass der Benutzer direkt erkennen kann, welches der Linienprojektionsvorrichtungen 122, 124, 126 mittels des jeweiligen Bedienelements 162, 164, 166 aktiviert. Ein Abstand zwischen der jeweiligen Flächennormalen 163, 165, 167 der Bedienelemente 162, 164, 166 der ersten Bedieneinheit 152 und der jeweiligen Flächennormale 142, 144, 146 der Austrittskuppel 132, 134, 136 ist dabei jeweils minimal. Zwei der drei Bedienelemente 162, 164, 166 der ersten Bedieneinheit grenzen jeweils an eine der Trennflächen 192, 194, 196 an. So grenzen das erste Bedienelement 162 und das zweite Bedienelement 164 der ersten Bedieneinheit 152 an die erste Trennfläche 192 an. Das zweite Bedienelement 164 und das dritte Bedienelement 166 der ersten Bedieneinheit 152 grenzen an die zweite Trennfläche 194 an. Das dritte Bedienelement 166 und das erste Bedienelement 162 der ersten Bedieneinheit 152 grenzen an die dritte Trennfläche 196 an.

## Patentansprüche

1. Laser-Nivelliervorrichtung (100) mit drei Linienprojektionsvorrichtungen (120, 122, 124, 126), die zueinander orthogonale Laserebenen emittieren, mit einem Gehäuse (110), wobei das Gehäuse (110) drei Austrittskuppeln (130, 132, 134, 136) für jeweils eine der Linienprojektionsvorrichtungen (120) aufweist, und mit einer Bedieneinheit (150) zur Bedienung der Laser-Nivelliervorrichtung (100), wobei die Bedieneinheit (150) zumindest ein Bedienelement (162, 164, 166, 172, 174) aufweist, das zwischen den Austrittskuppeln (130) angeordnet ist, wobei das Bedienelement (162, 164, 166, 172, 174) eine Flächennormale (163, 165, 167, 173, 175) aufweist, wobei jedes Bedienelement (162, 164, 166, 172, 174) eine Bedienfläche aufweist, wobei die Flächennormale (163, 165, 167, 173, 175) des Bedienelements (162, 164, 166, 172, 174) senkrecht auf der zugehörigen Bedienfläche angeordnet ist, wobei die Bedieneinheit (150, 152) zwischen den drei Austrittskuppeln (130, 132, 134, 136) angeordnet ist, wobei die drei Austrittskuppeln (130, 132, 134, 136) jeweils eine Flächennormale (140, 142, 144, 146) aufweisen und die Bedieneinheit (150, 152) zumindest eine Bedienfläche umfasst, wobei die Bedienfläche auf einer durch die drei Flächennormalen (140, 142, 144, 146) aufgespannten Ebene (158) angeordnet ist, wobei jeweils ein Punkt auf der jeweiligen Flächennormalen (140, 142, 144, 146) der Austrittskuppeln (130, 132, 134, 136) die Ebene (158) aufspannt.

2. Laser-Nivelliervorrichtung (100) nach Anspruch 1, **dadurch gekennzeichnet, dass** das Gehäuse (110) zumindest eine Trennfläche (190) aufweist, die zumindest abschnittsweise zwischen den Austrittskuppeln (130) angeordnet ist.

3. Laser-Nivelliervorrichtung (100) nach Anspruch 2, **dadurch gekennzeichnet, dass** die Trennfläche (190) eine Flächennormale (193, 195, 197) aufweist, die auf der durch die Flächennormalen (142, 144, 146) der Austrittskuppeln (130) aufgespannten Ebene (156) liegt.

4. Laser-Nivelliervorrichtung nach Anspruch 2 oder 3, **dadurch gekennzeichnet, dass** das Bedienelement (172, 174) auf der Trennfläche (190) angeordnet ist.

5. Laser-Nivelliervorrichtung (100) nach einem der vorhergehenden Ansprüche, **dadurch gekennzeichnet, dass** die Bedieneinheit (150, 152) drei Bedienelemente (162, 164, 166) aufweist, die jeweils einer Linienprojektionsvorrichtung (120, 122, 124, 126) zugeordnet sind.

## Claims

1. Laser levelling apparatus (100) comprising three line projection apparatuses (120, 122, 124, 126) which emit laser planes which are orthogonal to one another, comprising a housing (110), wherein the housing (110) has three output domes (130, 132, 134, 136) for in each case one of the line projection apparatuses (120), and comprising an operator control unit (150) for operator control of the laser levelling apparatus (100), wherein the operator control unit (150) has at least one operator control element (162, 164, 166, 172, 174) which is arranged between the output domes (130), wherein the operator control element (162, 164, 166, 172, 174) has a surface normal (163, 165, 167, 173, 175), wherein each operator control element (162, 164, 166, 172, 174) has an operator control surface, wherein the surface normal (163, 165, 167, 173, 175) of the operator control element (162, 164, 166, 172, 174) is arranged perpendicularly on the associated operator control surface, wherein the operator control unit (150, 152) is arranged between the three output domes (130, 132, 134, 136), wherein the three output domes (130, 132, 134, 136) each have a surface normal (140, 142, 144, 146) and the operator control unit (150, 152) comprises at least one operator control surface, wherein the operator control surface is arranged on a plane (158) spanned by the three surface normals (140, 142, 144, 146), wherein in each case a point on the respective surface normals (140, 142, 144, 146) of the outlet domes (130, 132, 134, 136) spans the plane (158).

2. Laser levelling apparatus (100) according to Claim 1, **characterized in that** the housing (110) has at least one separation surface (190) which is at least partially arranged between the output domes (130).

3. Laser levelling apparatus (100) according to Claim 2, **characterized in that** the separation surface (190) has a surface normal (193, 195, 197) which lies on the plane (156) spanned by the surface normals (142, 144, 146) of the output domes (130).

4. Laser levelling apparatus according to Claim 2 or 3, **characterized in that** the operator control element (172, 174) is arranged on the separation surface (190).

5. Laser levelling apparatus (100) according to any of the preceding claims, **characterized in that** the operator control unit (150, 152) has three operator control elements (162, 164, 166) which are each assigned to a line projection apparatus (120, 122, 124, 126).

## Revendications

1. Appareil de nivellement laser (100) avec trois dispositifs de projection de lignes (120, 122, 124, 126), qui émettent des plans laser orthogonaux les uns par rapport aux autres, avec un boîtier (110), le boîtier (110) comportant trois dômes de sortie (130, 132, 134, 136) pour chacun des appareils de projection de lignes (120), et avec une unité de commande (150) pour commander le dispositif de nivellement laser (100), l'unité de commande (150) comportant au moins un élément de commande (162, 164, 166, 172, 174), qui est disposé entre les dômes de sortie (130), l'élément de commande (162, 164, 166, 172, 174) comportant une normale de surface (163, 165, 167, 173, 175), chaque élément de commande (162, 164, 166, 172, 174) comportant une surface de commande, la normale de surface (163, 165, 167, 173, 175) de l'élément de commande (162, 164, 166, 172, 174) étant disposée perpendiculairement sur la surface de commande associée, l'unité de commande (150, 152) étant disposée entre les trois dômes de sortie (130, 132, 134, 136), les trois dômes de sortie (130, 132, 134, 136) comportant chacun une normale de surface (140, 142, 144, 146) et l'unité de commande (150, 152) comprenant au moins une surface de commande, la surface de commande étant disposée sur un plan (158) formé par les trois normales de surface (140, 142, 144, 146), dans chaque cas, un point sur la normale de surface (140, 142, 144, 146) respective des dômes de sortie (130, 132, 134, 136) formant le plan (158).

2. Dispositif de nivellement laser (100) selon la revendication 1, **caractérisé en ce que** le boîtier (110) comporte au moins une surface de séparation (190) qui est disposée au moins par endroits entre les dômes de sortie (130).

3. Dispositif de nivellement laser (100) selon la revendication 2, **caractérisé en ce que** la surface de séparation (190) comporte une normale de surface (193, 195, 197), qui se situe sur le plan (156) formé par les normales de surface (142, 144, 146) des dômes de sortie (130).

4. Dispositif de nivellement laser selon la revendication 2 ou 3, **caractérisé en ce que** l'élément de commande (172, 174) est disposé sur la surface de séparation (190).

5. Dispositif de nivellement laser (100) selon l'une des revendications précédentes, **caractérisé en ce que** l'unité de commande (150, 152) comporte trois éléments de commande (162, 164, 166), qui sont chacun associés à un dispositif de projection de lignes (120, 122, 124, 126).
